# EUROPEAN PATENT APPLICATION

(11) **EP 4 841 381 A1**
(43) Date of publication of application: **18.11.2026**
(21) Application number: 25315162.5
(22) Date of filing: 12.05.2025
(51) Int. Cl.: G05D 1/485, G05D 1/644

(54) **A ROTORCRAFT WITH A LOW NOISE FLIGHT MODE**

(71) Applicant: AIRBUS HELICOPTERS, 13725 Marignane Cedex (FR); AIRBUS HELICOPTERS DEUTSCHLAND GmbH, 86609 Donauwörth (DE)
(72) Inventor: Caillet, Julien, F-13725 Marignane cedex (FR); Lantzsch, Robin, D-86609 Donauwörth (DE); Reber, Daniel, D-86609 Donauwörth (DE); Pinacho, Jean-Paul, F-13725 Marignane cedex (FR); Dieumegard, Pierre, F-13725 Marignane cedex (FR)
(74) Representative: GPI Brevets

(57) **Abstract**

The invention relates to a rotorcraft (1) comprising a flight management system that is at least configured for determining a flight path for the rotorcraft (1) including a climb trajectory (21), a cruise trajectory, and a descent trajectory; and an automatic flight control system that is configured to execute at least one of: a low noise climb mode (20) for determining at least one of a climb angle (22), a rate of climb, or a climbing side slip angle (25a) of the rotorcraft (1) associated with a noise-reduced climb trajectory (25) that is derived from the climb trajectory (21); or a low noise descent mode for determining at least one of a descent angle, a rate of descent, or a descending side slip angle of the rotorcraft (1) associated with a noise-reduced descent trajectory that is derived from the descent trajectory.

## Description

The invention is related to a rotorcraft that comprises a flight management system and an automatic flight control system, wherein the flight management system is at least configured for determining a flight path for the rotorcraft.

Rotorcrafts are frequently used for missions in sensitive and/or high densely populated areas. However, although recent developments in rotorcraft technology lead to reductions in noise emission in rotorcraft operation, as can be seen from respective reductions of certification noise levels, an overall noise annoyance due to rotorcraft operation continues to increase. This may be due to an increase of the number of rotorcrafts operating in such sensitive and/or high densely populated areas and/or to an increased community requirement for quietness.

In the state-of-the-art, extensive research has been performed in the frame of active rotor control to enable rotorcrafts, such as helicopters, to fly quietly and to reduce noise exposure of the population on the ground. For instance, flight tests have been performed with helicopters equipped with an individual blade control system either at the blade root or with trailing edge flaps at the rotor blades. Such tests aim to reduce Blade-Vortex Interaction (BVI) noise when the helicopter is descending.

Moreover, numerous works also have been conducted to tackle the problem of designing low-noise operating procedures for helicopters. Most of the works focus on avoiding flight conditions in which BVI noise occurs, in particular when the helicopters are descending to respective landing points.

More specifically, among the main noise sources of a helicopter, the main rotor and the tail rotor of the helicopter lead to particularly annoying noise due to the emitted low frequency tonal content. Due to their inherent aerodynamic cause, the behavior of these noise sources depends strongly on flight conditions. Consequently, the key parameters that impact noise generation, which normally depends on piloting procedures, may include required thrust, air flow incidence, and angle of attack. The main focus in designing low-noise flight procedures is on controlling flight path angle and/or speed.

For instance, stochastic optimization methods are used to determine a noise-reduced trajectory for a given mission. These stochastic optimization methods lead to a non-negligible noise improvement but do not provide any guarantee of optimality. Furthermore, deterministic graph-based methods may also be used to determine a single noise-reduced trajectory for a given mission. Nevertheless, use of such deterministic graph-based methods is only possible under the assumption that noise is factorable which, however, is not the case.

By way of example, the document US 2024/021089 A1 describes a method of determining a trajectory for a rotorcraft. The method performs iterations of a loop comprising adding an initial trajectory to a set of selectable trajectories, evaluating a noise indicator of the rotorcraft for the initial trajectory, adding an evaluated noise indicator to a set of evaluated noise indicators, determining an alternative trajectory defining an alternative flight path, and setting the alternative trajectory as initial trajectory. The method outputs a trajectory of the set of selectable trajectories associated with a selected noise indicator fulfilling predetermined noise indicator conditions.

In all cases, however, once such trajectory parameters are determined, there may be various trimming solutions to fly a given trajectory. Consequently, some room exists to further reduce noise in flight operations, especially in case of significant traffic in the given sensitive and/or high densely populated area. As these parameters may impact comfort on board, these trajectory parameters have to be predetermined.

In addition to determining a certain noise-reduced trajectory, advanced flight control systems already provide basic rotorcraft stabilization and upper modes to ease the work in operation of the crew, which is already performing many complex tasks, particularly during take-off and landing phases. More specifically, recent systems and technologies enable to precisely tune flight control parameters, such as side slip and/or roll angle of the rotorcraft.

However, pilots are not necessarily aware of respectively emitted noise during operation. As pilots usually do not have any updated information on how to fly more quietly in rotorcraft operation on a given trajectory, when caring about noise, they usually refer to noise abatement guidelines that are present in respective flight manuals of rotorcrafts, if available.

It is, therefore, an object of the present invention to provide a new rotorcraft which is adapted to implement an automated noise control solution to minimize noise based on multiple predetermined optimized flight paths and associated trim conditions with appropriate visual feedback to the pilot.

The above-described object is solved by a rotorcraft comprising the features of claim 1. More specifically, the rotorcraft comprises a flight management system and an automatic flight control system. The flight management system is at least configured for determining a flight path for the rotorcraft including a climb trajectory, a cruise trajectory, and a descent trajectory. The automatic flight control system is configured to execute at least one of: a low noise climb mode for determining at least one of a climb angle, a rate of climb, or a climbing side slip angle of the rotorcraft associated with a noise-reduced climb trajectory that is derived from the climb trajectory; or a low noise descent mode for determining at least one of a descent angle, a rate of descent, or a descending side slip angle of the rotorcraft associated with a noise-reduced descent trajectory that is derived from the descent trajectory.

Preferably, the automatic flight control system may further, or alternatively, be configured to execute a low noise cruise mode for determining at least a cruising side slip angle of the rotorcraft associated with a noise-reduced cruise trajectory that is derived from the cruise trajectory. Alternatively, or in addition, executing the low noise cruise mode may comprise determining a roll angle of the rotorcraft, an adjusted rotational speed of a respective main and/or tail rotor of the rotorcraft, a respective airspeed or an associated ground speed.

Advantageously, the automatic flight control system provides for an improved noise control by implementing at least noise optimized departure or approach profiles as well as noise optimized trim states adapted for execution of the noise optimized departure or approach profiles. Such trim states during departure or approach are preferably automatically noise optimized without impairing passenger comfort.

More specifically, the inventive rotorcraft provides automatic noise reduction control modes for various flight conditions, including at least climbing and descent phases, through the automatic flight control system. The automatic flight control system detects predetermined noise reduction conditions and calculates and controls appropriate trim solutions to reduce noise.

Preferably, the automatic flight control system may automatically or semi-automatically achieve a noise reduction for flight missions, as the noise reduction control modes will be embedded in the automatic flight control system. Hence, once a respective noise reduction mode is automatically activated, or manually activated by the pilot, noise reduction on ground will be guaranteed even if the pilot does not necessarily know which operating conditions favor the noise reduction. Regardless of a required noise reduction task, the pilot workload during approach, descent or overflight depending on the mission is not negatively affected.

Furthermore, the inventive rotorcraft with the flight management system and the automatic flight control system contribute to so-called "green" rotorcraft technologies and enable rotorcrafts to fly comparatively quiet in order to reduce noise exposure to population on the ground. More particularly, advanced flight control capabilities of such rotorcrafts may be used to manage the side slip and/or roll angle of the rotorcraft in various flight conditions. If desired, the design of the low noise automatic flight control system (AFCS) control mode could be applicable to most rotorcraft types, in particular the ones equipped with an advanced AFCS.

If desired, the automatic flight control system is configured to execute the following AFCS modes including a low noise climb mode, a low noise descent mode, and a low noise cruise mode. For instance, the low noise climb mode may be executed to control rotorcraft trajectories (e. g., flight path angle, rate of climb) and trim parameters in climbing phase, and reduce the required thrust generated by the Fenestron or a tail rotor, which reduces the noise generated. Furthermore, the low noise descent mode may be executed to control rotorcraft trajectories (e. g., flight path angle, rate of descent) and trim parameters in descent phase, and modify the loading of the Fenestron, or tail rotor by modifying the rotorcraft roll angle which changes the flow incidence on main rotor and tail rotor. Moreover, the low noise cruise mode may be executed to control rotorcraft trim parameters for overflight by modifying the rotorcraft roll angle to modify the Fenestron thrust or tail rotor thrust.

If desired, visual feedback may be provided to the pilot on the activation state of the above-described low noise modes as well as trim states that are necessary for noise optimized departures, approaches, or overflights. Furthermore, a flight director indication may be provided to the pilot to manually fly the rotorcraft in noise optimized flight missions for departure, approach, or overflight.

According to some aspects, at least one of the noise-reduced climb trajectory or the noise-reduced descent trajectory is provided by the flight management system.

According to some aspects, at least one of the noise-reduced climb trajectory or the noise-reduced descent trajectory is provided by the automatic flight control system and/or entered into the automatic flight control system via pilot input devices.

According to some aspects, the low noise climb mode and the low noise descent mode are manually or automatically engageable.

Preferably, the low noise climb mode and the low noise descent mode are manually or automatically disengageable.

According to some aspects, the automatic flight control system is configured to enable manual engagement of the low noise climb mode or the low noise descent mode by a pilot of the rotorcraft for initiating automatic rotorcraft control by the automatic flight control system in the low noise climb mode or the low noise descent mode.

According to some aspects, the automatic flight control system is configured to engage the low noise climb mode or the low noise descent mode automatically if predetermined engagement conditions are fulfilled.

According to some aspects, the predetermined engagement conditions are fulfilled if the rotorcraft is taking-off or landing in a noise-sensitive area.

According to some aspects, the predetermined engagement conditions are fulfilled if a predefined rotorcraft flight state, including at least one of flight attitude, flight altitude or flight speed, is prevailing.

According to some aspects, the rotorcraft further comprises a multi-function display, wherein the automatic flight control system is configured to provide a low noise indication on the multi-function display for visualizing during climb or descent of the rotorcraft that the noise-reduced climb trajectory or the noise-reduced descent trajectory is available.

According to some aspects, the automatic flight control system is configured to provide flight director indications on the multi-function display for enabling a pilot of the rotorcraft to fly the rotorcraft along at least one of the noise-reduced climb trajectory or the noise-reduced descent trajectory.

According to some aspects, the automatic flight control system is configured to provide a noise-reduced flight indication on the multi-function display if the low noise climb mode or the low noise descent mode is engaged.

According to some aspects, the rotorcraft comprises at least one main rotor with associated main rotor actuators, at least one tail rotor with associated tail rotor actuators, and at least one engine for powering the at least one main rotor and the at least one tail rotor; wherein the automatic flight control system is configured to determine trim states of the main rotor actuators, the tail rotor actuators and the at least one engine which are required for flight of the rotorcraft on the noise-reduced climb trajectory or the noise-reduced descent trajectory.

According to some aspects, trim states of the tail rotor actuators associated with the climbing side slip angle of the noise-reduced climb trajectory are determined to reduce noise emission of the at least one tail rotor on the noise-reduced climb trajectory.

According to some aspects, trim states of the tail rotor actuators associated with the descending side slip angle of the noise-reduced descent trajectory are determined to reduce noise emission of the at least one tail rotor on the noise-reduced descent trajectory.

According to some aspects, the automatic flight control system may be configured to execute a low noise cruise mode for determining at least a cruising side slip angle of the rotorcraft, a roll angle of the rotorcraft, an adjusted rotational speed of a respective main and/or tail rotor of the rotorcraft, a respective airspeed and/or an associated ground speed of the rotorcraft associated with a noise-reduced cruise trajectory that is derived from the cruise trajectory. More specifically, the automatic flight control system may be configured to execute at least one of: the low noise climb mode for determining at least one of the climb angle, the rate of climb, or the climbing side slip angle of the rotorcraft associated with the noise-reduced climb trajectory that is derived from the climb trajectory; the low noise cruise mode for determining at least the cruising side slip angle of the rotorcraft, a roll angle of the rotorcraft, an adjusted rotational speed of a respective main and/or tail rotor of the rotorcraft, a respective airspeed and/or an associated ground speed of the rotorcraft associated with the noise-reduced cruise trajectory that is derived from the cruise trajectory; or the low noise descent mode for determining at least one of the descent angle, the rate of descent, or the descending side slip angle of the rotorcraft associated with the noise-reduced descent trajectory that is derived from the descent trajectory.

According to some aspects, the noise-reduced cruise trajectory is provided by the flight management system or the automatic flight control system, and/or entered into the automatic flight control system via pilot input devices.

According to some aspects, the low noise cruise mode is manually or automatically engageable, wherein the low noise cruise mode is manually or automatically disengageable.

According to some aspects, the automatic flight control system is configured to enable manual engagement of the low noise cruise mode by a pilot of the rotorcraft for initiating automatic rotorcraft control by the automatic flight control system in the low noise cruise mode.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of an illustrative rotorcraft according to the present invention,
- Figure 2 shows a schematic view of a climbing phase of the rotorcraft of Figure 1, and
- Figure 3 shows a schematic view of a descending phase of the rotorcraft of Figure 1.

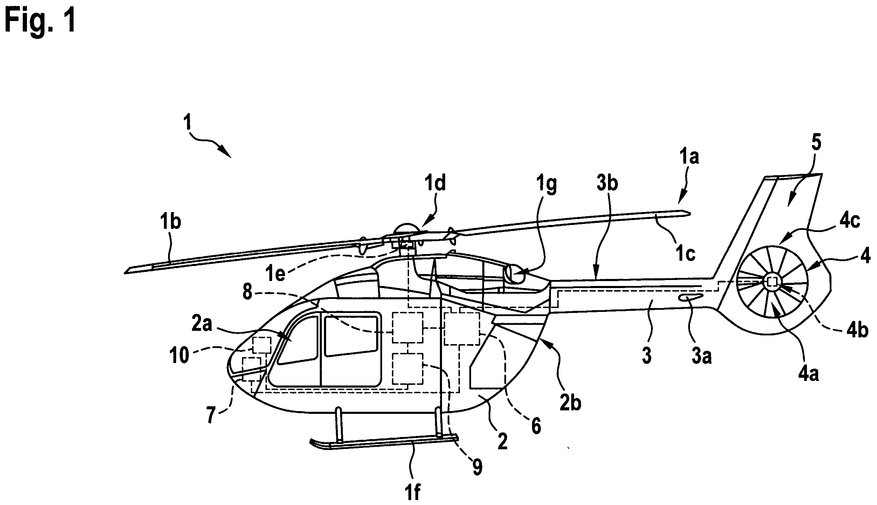

Figure 1 shows an aircraft 1 that is illustratively embodied as a rotorcraft and, more particularly, as a helicopter. Thus, for purposes of simplicity and clarity, the aircraft 1 is hereinafter referred to as the "helicopter 1". The present invention is, however, not limited to helicopters and may likewise be applied to any other rotorcraft.

The helicopter 1 comprises at least one main rotor 1a, by way of example a multi-blade main rotor, for providing lift and forward or backward thrust during operation. By way of example, the at least one main rotor 1a comprises a plurality of rotor blades which are connected at an associated rotor head 1d to a rotor shaft, which rotates in operation of the helicopter 1 about an associated rotor axis. Two rotor blades of the plurality of rotor blades are illustratively separately labelled with the reference signs 1b, 1c.

The at least one main rotor 1a further comprises associated main rotor actuators 1e. Suitable actuators which may be used to implement the associated main rotor actuators 1e are, however, well-known to the person skilled in the art, so that a detailed description thereof may be omitted, for brevity and conciseness.

According to the present invention, the helicopter 1 further comprises a flight control system (FCS) 6 for controlling at least the main rotor actuators 1e. Illustratively, the FCS 6 is also connected to associated flight controls 7 of the helicopter 1.

The FCS 6 may be implemented as a conventional flight control system with a direct link between the flight controls 7 and at least the main rotor actuators 1e, or as a fly-by-wire (FBW) flight control system with an electrical or optical link between the flight controls 7 and at least the main rotor actuators 1e.

Moreover, the helicopter 1 preferably comprises a fuselage 2 and a landing gear 1f which is only illustratively of the skid-type. By way of example, a left-hand side of the fuselage 2 is shown and, thus, a portside wall of the fuselage 2 of the helicopter 1. Illustratively, the fuselage 2 forms an aircraft interior region that accommodates a cockpit 2a and that may further accommodate a cabin for passengers and/or cargo.

At an upper section of the fuselage 2, the helicopter 1 may comprise at least one engine 1g for powering at least the main rotor 1a. At this point, it should be noted that only an engine 1g is separately labeled in Figure 1, as it is arranged on the left-hand side of the helicopter 1. However, the helicopter 1 is, by way of example, embodied with a twin-engine configuration having two engines which form the at least two engines which, thus, comprise in addition to the engine 1g another engine that may e. g. be arranged on a right-hand side of the helicopter 1 such that it is not visible in Figure 1.

Illustratively, the fuselage 2 may be connected at a rear fuselage 2b to a tail boom 3 with a horizontal stabilizer 3a. The tail boom 3 may be implemented as a slim beam element that comprises at least a tubular tail boom cone 3b.

Illustratively, the helicopter 1 further comprises at least one counter-torque device 4 configured to provide counter-torque during operation, i. e. to counter the torque created by rotation of the at least one rotor 1a for purposes of balancing the helicopter 1 in terms of yaw. The at least one counter-torque device 4 is illustratively provided at an aft section of the tail boom 3 and preferably comprises a tail rotor 4a. Preferably, the at least one engine 1g is configured for powering the at least one main rotor 1a and the at least one tail rotor 4a. If desired, the tail rotor 4a may be shrouded by a tail rotor shrouding 4c. The aft section of the tail boom 3 may further comprise a fin 5.

Preferably, the tail rotor 4a further comprises associated tail rotor actuators 4b. The FCS 6 is preferably also adapted for controlling the tail rotor actuators 4b. Suitable actuators which may be used to implement the associated tail rotor actuators 4b are, however, well-known to the person skilled in the art, so that a detailed description thereof may be omitted, for brevity and conciseness.

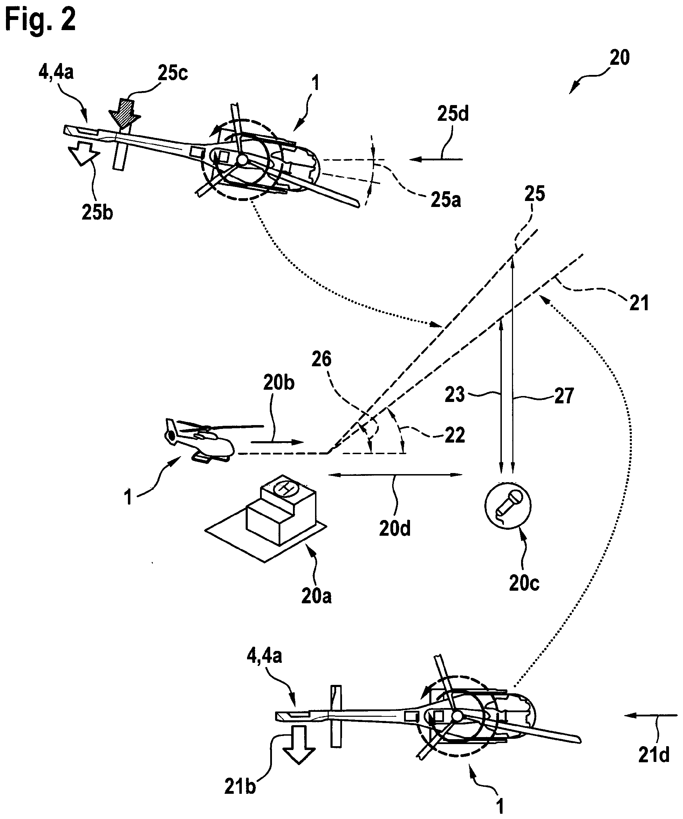

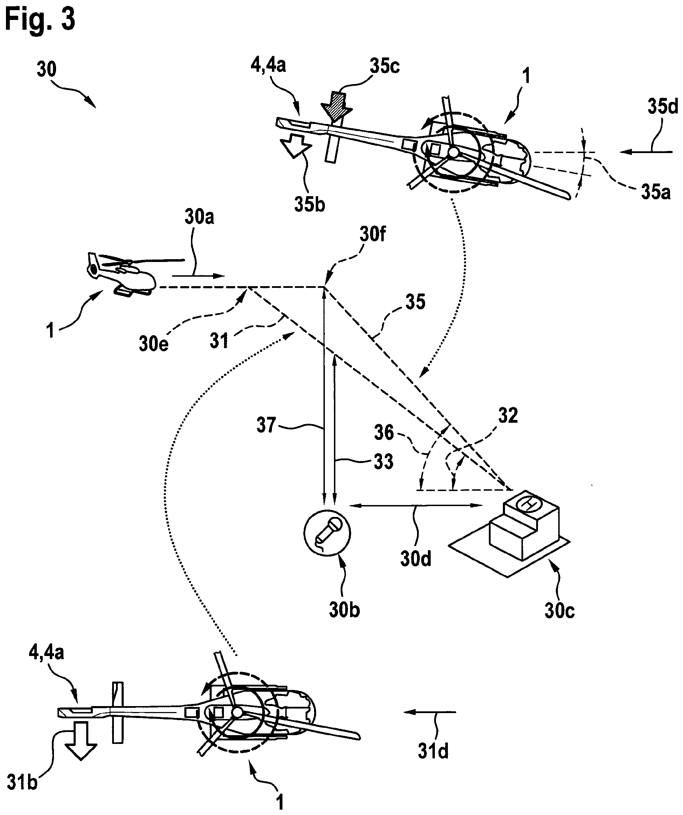

According to the present invention, the helicopter 1 comprises an automatic flight control system (AFCS) 8 and a flight management system (FMS) 9. The FMS 9 is at least configured for determining a flight path for the helicopter 1 including a climb trajectory, a cruise trajectory, and a descent trajectory. The AFCS 8 is configured to execute at least one of a low noise climb mode (20 in Figure 2) for determining at least one of a climb angle, a rate of climb, or a climbing side slip angle of the helicopter 1 associated with a noise-reduced climb trajectory (25 in Figure 2) that is derived from the climb trajectory; or a low noise descent mode (30 in Figure 3) for determining at least one of a descent angle, a rate of descent, or a descending side slip angle of the helicopter 1 associated with a noise-reduced descent trajectory (35 in Figure 3) that is derived from the descent trajectory. Furthermore, the AFCS 8 may be configured to enable execution of a low noise cruise mode for determining at least a cruising side slip angle of the helicopter 1 associated with a noise-reduced cruise trajectory that is derived from the cruise trajectory. If desired, the noise-reduced cruise trajectory may be provided by the FMS 9 or the AFCS 8.

Preferably, the AFCS 8 is capable of both basic stabilization and also fully-hands-off upper modes. If desired, the AFCS upper modes may control the helicopter flight path angle, speed, main rotor rotational speed, rate of descent/climb, and the helicopter trim parameters such as roll / side slip angle for several flight conditions.

Furthermore, the helicopter 1 may comprise a multi-function display (MFD) 10. The AFCS 8 may be configured to provide indications on the MFD 10 for e. g. visualizing feedback to the flight crew that an AFCS mode is available and/or engaged during climb, descent, or cruise of the helicopter 1.

Figure 2 shows a low noise climb mode 20 of the helicopter 1 during a climbing phase. As described above at Figure 1, the helicopter 1 comprises the FMS 9 of Figure 1 that is at least configured for determining a flight path for the helicopter 1 including a climb trajectory, i. e. climb trajectory 21. Furthermore, the helicopter 1 comprises the AFCS 8 of Figure 1 that is configured to execute the low noise climb mode 20 for determining at least one of a climb angle 22, a rate of climb, or a climbing side slip angle 25a of the helicopter 1 associated with a noise-reduced climb trajectory 25 that is derived from the climb trajectory 21.

Illustratively, the climb trajectory 21 may represent a reference trajectory for the helicopter 1 to perform a climbing phase from a climb trajectory starting point 20a in a forward flight direction 20b. It is understood that the climb trajectory 21 may already be a trajectory that is determined according to the state-of-the-art in order to lower to some extent the noise emitted in a noise sensitive area, which is illustratively represented by a noise emission observation point 20c. By way of example, the noise emission observation point 20c is at a distance 20d of the climb trajectory starting point 20a.

As shown in Figure 2, the helicopter 1 following the climb trajectory 21 at a climb angle 22 with an air speed 21d would reach above the noise emission observation point 20c an associated climb trajectory height 23. Illustratively, the helicopter 1 follows the climb trajectory 21 with substantially zero climbing side slip angle, and the tail rotor thrust 21b of the tail rotor 4a and the airframe reaction force cancel the undesired torque produced by the main rotor 1a. Flight tests conducted under such a scenario showed that when the distance 20d between the climb trajectory starting point 20a and the noise emission observation point 20c amounts to 500 meters and a rate of climb of the helicopter amounts to 1650 feet per minute (i. e. about 503 meters per minute), the climb trajectory height 23 above the noise emission observation point 20c would be about 139 meters.

According to the present invention, with the low noise climb mode 20 engaged, the helicopter 1 follows the noise-reduced climb trajectory 25 that is derived from the climb trajectory 21. If desired, the noise-reduced climb trajectory 25 may be provided by the FMS 9 of Figure 1. Alternatively, the noise-reduced climb trajectory 25 may be provided by the AFCS 8 of Figure 1. In other words, the noise-reduced climb trajectory 25 may be provided either by the FMS 9 using 4-D guidance as a noise optimized standard instrument departure, or the noise-reduced climb trajectory 25 may be calculated internally by the AFCS 8.

By way of example, the helicopter 1 may employ a climbing side slip angle 25a on the noise-reduced climb trajectory 25. That is, the longitudinal axis of the helicopter 1 laterally deviates from the air speed 25d on noise-reduced climb trajectory 25 by the climbing side slip angle 25a.

Illustratively, trim states of the tail rotor actuators 4b are associated with the climbing side slip angle 25a of the noise-reduced climb trajectory 25. Such trim states of the tail rotor actuators 4b may be determined to reduce noise emission of the at least one tail rotor 4a on the noise-reduced climb trajectory 25. If desired, the AFCS 8 may be configured to determine the trim states of the main rotor actuators 1e, the tail rotor actuators 4b and the at least one engine 1g which are required for flight of the helicopter 1 on the noise-reduced climb trajectory 25.

If desired, the AFCS 8 may adjust the roll angle and yaw angle of the helicopter 1 to minimize the thrust generated by the Fenestron or the tail rotor 4a based on the criteria air speed 25d and rate of climb in order to achieve the climbing side slip angle 25a. As shown in Figure 2, the tail rotor 4 may produce a tail rotor thrust 25b on the noise-reduced climb trajectory 25, the tail rotor thrust 25b being smaller than the tail rotor thrust 21b on the climb trajectory 21. Furthermore, the helicopter 1 following the noise-reduced climb trajectory 25 at the climbing side slip angle 25a illustratively produces an airframe created anti-torque 25c. As such, the tail rotor thrust 25b of the tail rotor 4a, the airframe created anti-torque 25c and the airframe reaction force cancels the undesired torque produced by the main rotor 1a. By way of example, the helicopter 1 may use the same rate of climb and achieve a noise reduction on ground by the torque reduction, which would advantageously also result in less fuel consumption. For instance, the reduced tail rotor thrust 25b may be equal to 50 % of the tail rotor thrust 21b, and the tail rotor shrouding 4c may produce the airframe created anti-torque 25c that is equal to 50 % of the tail rotor thrust 21b.

If desired, the helicopter 1 may maintain the same fuel consumption and employ an increased rate of climb to reduce a noise effect on ground by making the climb later and faster with less time to be left for the noise on ground to be recognized. By way of example, the climb angle of the helicopter changes from the climb angle 22 on the climb trajectory 21 to a climb angle 26 on the noise-reduced climb trajectory 25. The climb angle 26 is greater than the climb angle 22 such that the noise perception on ground at the noise emission observation point 20c is reduced due to an optimized climb rate at an appropriate speed.

More specifically, as the tail rotor thrust 25b is reduced on the noise-reduced climb trajectory 25, the tail rotor 4a requires less power from the engine 1g. Consequently, the engine 1g may provide more power to the main rotor 1a for lifting, yet could maintain overall the same fuel consumption during the climbing phase.

Illustratively, the helicopter 1 following the noise-reduced climb trajectory 25 may arrive at a noise-reduced climb trajectory height 27 that is way beyond the climb trajectory height 23 due to the increased climb angle 26 and/or an increased rate of climb on the noise-reduce climb trajectory 25 of the helicopter 1. Flight tests conducted under such a noise-reduced scenario showed that, when the distance 20d between the climb trajectory starting point 20a and the noise emission observation point 20c is 500 meters, by following the noise-reduced climb trajectory 25 at an increased rate of climb of the helicopter of 1990 feet per minute (i. e. about 607 meters per minute), the climb trajectory height 25 above the noise emission observation point 20c would be about 166 meters.

If desired, the low noise climb mode 20 may be manually engageable. By way of example, the AFCS 8 may be configured to enable manual engagement of the low noise climb mode 20 by a pilot of the helicopter 1 for initiating automatic rotorcraft control by the AFCS 8 in the low noise climb mode 20. For instance, the low noise climb mode 20 may be manually engaged by the pilot when performing a take-off, and/or the pilot may select manually a state during climb to activate the low noise climb mode 20.

Illustratively, the AFCS 8 may be configured to provide a low noise indication on the MFD 10 for visualizing during climb of the helicopter 1 that the noise-reduced climb trajectory 25 is available. By way of example, the flight crew may engage the low noise climb mode 20 following the low noise indication on the MFD 10. By way of example, the flight crew may activate the low noise climb mode 20 by pressing a predefined button e.g. on a respective cyclic grip or MFD 10. Preferably, an indication will then be provided to the pilot that the low noise climb mode 20 is active.

If desired, the AFCS 8 may be configured to provide flight director indications on the MFD 10 for enabling the pilot of the helicopter 1 to fly the helicopter 1 along the noise-reduced climb trajectory 25. However, the pilot may disengage the low noise climb mode 20 by not following the indication on the MFD 10 associated with the noise-reduced climb trajectory 25.

By way of example, the AFCS 8 may be configured to provide flight director indications on the MFD 10 including an indication which pitch angel, roll angle, and/or lateral acceleration should be executed to fly the helicopter 1 along the noise-reduced climb trajectory 25. As such, for flying the noise-reduced climb trajectory 25, the pilot only needs to follow the cyclic and pedal controls input shown on the MFD 10.

Alternatively, after the low noise climb mode 20 is manually engaged, the AFCS 8 may be configured to automatically fly the helicopter 1 along the noise-reduced climb trajectory 25. For instance, the AFCS 8 may be configured to keep the helicopter 1 on the noise-reduced climb trajectory 25 by controlling the air speed 25d and rate of climb. Furthermore, the AFCS 8 may be configured to automatically adjust the roll and yaw angle of the helicopter 1 to minimize the tail rotor thrust 25b.

If desired, the low noise climb mode 20 may be manually disengageable. For instance, the pilot may deactivate the low noise climb mode 20 by pressing a predefined button, e. g. the activation button, a second time.

According to some aspects, the low noise climb mode 20 may be automatically engageable. By way of example, the AFCS 8 may be configured to engage the low noise climb mode 20 automatically if predetermined engagement conditions are fulfilled. For instance, the predetermined engagement conditions are fulfilled if the helicopter 1 is taking-off in a noise-sensitive area. Furthermore, the predetermined engagement conditions may also be fulfilled if a predefined helicopter flight state, including at least one of flight attitude, flight altitude or flight speed, is prevailing.

Furthermore, if desired, after the low noise climb mode 20 is automatically engaged, the AFCS 8 may be configured to automatically fly the helicopter 1 along the noise-reduced climb trajectory 25 similar to if the low noise climb mode 20 is manually engaged as described above.

Illustratively, when the low noise climb mode 20 is manually or automatically engaged, appropriate feedback may be indicated to the pilot. For instance, the AFCS 8 may be configured to provide a noise-reduced flight indication on the MFD 10 if the low noise climb mode 20 is engaged.

If desired, the low noise climb mode 20 may be automatically disengageable. By way of example, the low noise climb mode 20 may be automatically disengaged when the helicopter 1 reaches a position determined by the FMS 9 where the helicopter 1 has left the noise sensitive area or the helicopter 1 reaches the cruise or level flight altitude.

According to the present invention, the FMS 9 is configured for determining a flight path for the helicopter including a cruise trajectory. Illustratively, the AFCS 8 may be further configured to execute a low noise cruise mode for determining at least a cruising side slip angle of the helicopter 1 associated with a noise-reduced cruise trajectory that is derived from the cruise trajectory. If desired, the noise-reduced cruise trajectory may be provided by the FMS 9 or the AFCS 8.

By way of example, the low noise cruise mode may be manually or automatically engageable. More specifically, the AFCS 8 may be configured to enable manual engagement of the low noise cruise mode by a pilot of the helicopter 1 for initiating automatic helicopter control by the AFCS 8 in the low noise cruise mode.

Similar to procedures for manually engaging the low noise climb mode 20, the AFCS 8 may be configured to provide a low noise indication on the MFD 10 for visualizing during cruise of the helicopter 1 that the noise-reduced cruise trajectory is available. The flight crew may engage the low noise cruise mode following the low noise indication on the MFD 10. By way of example, the flight crew may activate the low noise cruise mode by pressing a predefined button, e. g. on a respective cyclic grip or MFD 10. Preferably, an indication will then be provided to the pilot that the low noise cruise mode is active.

If desired, the AFCS 8 may be configured to provide flight director indications on the MFD 10 for enabling the pilot of the helicopter 1 to fly the helicopter 1 along the noise-reduced cruise trajectory. However, the pilot may disengage the low noise cruise mode by not following the indication on the MFD 10 associated to the noise-reduced cruise trajectory.

By way of example, the AFCS 8 may be configured to provide flight director indications on the MFD 10 including an indication which pitch angel, roll angle, and/or lateral acceleration should be executed to fly the helicopter 1 along the noise-reduced cruise trajectory. As such, for flying the noise-reduced cruise trajectory, the pilot only needs to follow the cyclic and pedal controls input shown on the MFD 10.

Alternatively, after the low noise cruise mode is manually engaged, the AFCS 8 may be configured to automatically fly the helicopter 1 along the noise-reduced cruise trajectory. For instance, the AFCS 8 may be configured to keep the helicopter 1 on the noise-reduced cruise trajectory by controlling the air speed and rate of climb. Furthermore, the AFCS 8 may be configured to accordingly adjust the roll and yaw angle of the helicopter 1 to minimize the tail rotor thrust.

Similar to procedures for automatically engaging the low noise climb mode 20, the AFCS 8 may be configured to engage the low noise cruise mode automatically if predetermined engagement conditions are fulfilled. For instance, the predetermined engagement conditions are fulfilled if the helicopter 1 is still at an altitude that is within a preset distance to the noise-sensitive area. Furthermore, the predetermined engagement conditions may also be fulfilled if the FMS 9 determines that the helicopter 1 is in a position or region that requires a low noise cruise flight. If desired, after the low noise cruise mode is automatically engaged, the AFCS 8 may be configured to automatically fly the helicopter 1 along the noise-reduced cruise trajectory similar to flying after the low noise cruise mode is manually engaged as described above.

Illustratively, when the low noise cruise mode is manually or automatically engaged, appropriate feedback may be indicated to the pilot. For instance, the AFCS 8 may be configured to provide a noise-reduced flight indication on the MFD 10 if the low noise cruise mode is engaged.

If desired, the low noise cruise mode may be manually or automatically disengageable. For instance, the pilot may deactivate the low noise cruise mode by pressing a predefined button, e. g. the activation button, a second time. Alternatively, the low noise cruise mode may be automatically disengaged when the helicopter 1 reaches a higher altitude where the low noise effect on ground is no longer relevant or if the FMS 9 determines that the helicopter 1 has left the noise sensitive area.

Figure 3 shows the helicopter 1 of Figure 1 which illustratively approaches a noise sensitive area and performs a descending phase nearby. As shown in Figure 3, the FMS 9 of Figure 1 is configured for determining a flight path for the helicopter including a descent trajectory 31, and the AFCS 8 of Figure 1 is configured to execute a low noise descent mode 30 for determining at least one of a descent angle 32, a rate of descent, or a descending side slip angle 35a of the helicopter 1 associated with a noise-reduced descent trajectory 35 that is derived from the descent trajectory 31.

Illustratively, the descent trajectory 31 may represent a reference trajectory for the helicopter 1 following a forward flight direction 30a to perform a descending phase from a descent trajectory starting point 30e to a landing point 30c. It is understood that the descent trajectory 31 may be a descending trajectory that is already determined according to any state-of-the-art in order to lower to some extent the noise to be emitted in the noise sensitive area, which is illustratively represented by a noise emission observation point 30b. By way of example, the noise emission observation point 30b is at a distance 30d to the landing point 30c.

As shown in Figure 3, the helicopter 1 following the descent trajectory 31 at the descent angle 32 with an air speed 31d would reach the noise emission observation point 30b at a descent trajectory height 33. Illustratively, the helicopter 1 follows the descent trajectory 31 with substantially zero descending side slip angle, and the tail rotor thrust 31b of the tail rotor 4a and the airframe reaction force cancel the undesired torque produced by the main rotor 1a.

According to the present invention, with the low noise descent mode 30 engaged, the helicopter 1 follows the noise-reduced descent trajectory 35 that is derived from the descent trajectory 31. If desired, the noise-reduced descent trajectory 35 may be provided by the FMS 9. Alternatively, the noise-reduced descent trajectory 35 may be provided by the AFCS 8. In other words, the noise-reduced descent trajectory 35 may be provided either by the FMS 9 using 4-D guidance as a noise optimized standard approach procedure, or the noise-reduced descent trajectory 35 may be calculated internally by the AFCS 8.

By way of example, the helicopter 1 may employ a descending side slip angle 35a on the noise-reduced descent trajectory 35. That is, the longitudinal axis of the helicopter 1 laterally deviates from the air speed 35d on the noise-reduced descent trajectory 35 by the descending side slip angle 35a.

Illustratively, trim states of the tail rotor actuators 4b are associated with the descending side slip angle 35a of the noise-reduced descent trajectory 35. Such trim states of the tail rotor actuators 4b may be determined to reduce noise emission of the at least one tail rotor 4a on the noise-reduced descent trajectory 35. If desired, the AFCS 8 may be configured to determine the trim states of the main rotor actuators 1e, the tail rotor actuators 4b and the at least one engine 1g which are required for flight of the helicopter 1 on the noise-reduced descent trajectory 35.

If desired, the AFCS 8 may adjust the roll angle and yaw angle of the helicopter 1 to adjust the thrust generated by the Fenestron or the tail rotor 4a based on the criteria air speed 35d and rate of descent and to achieve the descending side slip angle 35a. As shown in Figure 3, the tail rotor 4 may produce a tail rotor thrust 35b on the noise-reduced descent trajectory 35, the tail rotor thrust 35b being different from the tail rotor thrust 31b on the descent trajectory 31. Furthermore, the helicopter 1 following the noise-reduced descent trajectory 35 at the descending side slip angle 35a produces an airframe created anti-torque 35c. As such, the tail rotor thrust 35b of the tail rotor 4a, the airframe created anti-torque 35c, and the airframe reaction force cancel the undesired torque produced by the main rotor 1a. If desired, the AFCS 8 may be configured to minimize main rotor blade vortex interactions and the interaction noise between the main rotor 1a and the tail rotor 4a. That is, flying with an appropriate combination of speed and rate of descent may yield a significant noise emission reduction due to reduced aerodynamic interactions. Furthermore, flight tests in the frame of certification of automatic GPS based low noise descent mode 30 show that the AFCS 8 significantly contributes to workload reduction when the helicopter 1 is flying with high approach angles.

Illustratively, the helicopter 1 may employ an increased rate of descent to reduce a noise effect on ground by making the descent faster at a later starting point such that less time would be left for the noise on ground to be recognized. Consequently, a noise-reduced descent trajectory height 37 above the noise emission observation point 30b can be much greater than the descent trajectory height 33.

Furthermore, the descent angle of the helicopter 1 changes from the descent angle 32 on the descent trajectory 31 to a descent angle 36 on the noise-reduced descent trajectory 35. The descent angle 36 is greater than the descent angle 32 such that the noise perception on ground at the noise emission observation point 30c is reduced due to an optimized descent rate at an appropriate speed.

If desired, the low noise descent mode 30 may be manually engageable. By way of example, the AFCS 8 may be configured to enable manual engagement of the low noise descent mode 30 by a pilot of the helicopter 1 for initiating automatic helicopter control by the AFCS 8 in the low noise descent mode 30. For instance, the pilot may select manually at which state during descent the low noise descent mode 30 should be activated.

By way of example, the AFCS 8 may be configured to provide a low noise indication on the MFD 10 for visualizing during descent of the helicopter 1 that the noise-reduced descent trajectory 35 is available. For instance, the flight crew may engage the low noise descent mode 30 following the low noise indication on the MFD 10. If desired, the flight crew may activate the low noise descent mode 30 by pressing a predefined button e.g. on a respective cyclic grip or MFD 10. Preferably, an indication will then be provided to the pilot that the low noise descent mode 30 is active.

If desired, the AFCS 8 may be configured to provide flight director indications on the MFD 10 for enabling the pilot of the helicopter 1 to fly the helicopter 1 along the noise-reduced descent trajectory 35. However, the pilot may disengage the low noise descent mode 30 by not following the indication on the MFD 10 associated to the noise-reduced descent trajectory 35.

By way of example, the AFCS 8 may be configured to provide flight director indications on the MFD 10 including an indication which pitch angel, roll angle, and/or lateral acceleration should be executed to fly the helicopter 1 along the noise-reduced descent trajectory 35. As such, for flying the noise-reduced descent trajectory 35, the pilot only needs to follow the cyclic and pedal controls input shown on the MFD 10.

Alternatively, after the low noise descent mode 30 is manually engaged, the AFCS 8 may be configured to automatically fly the helicopter 1 along the noise-reduced descent trajectory 35. For instance, the AFCS 8 may be configured to keep the helicopter 1 on the noise-reduced descent trajectory 35 by controlling the air speed 35d and rate of descent. Furthermore, the AFCS 8 may be configured to automatically adjust the roll and yaw angle of the helicopter 1 to adjust the tail rotor thrust 35b.

If desired, the low noise descent mode 30 may be manually disengageable. For instance, the pilot may deactivate the low noise descent mode 30 by pressing a predefined button, e. g. the activation button, a second time.

According to some aspects, the low noise descent mode 30 may be automatically engageable. For instance, the AFCS 8 may automatically detect the optimal point to activate the low noise descent mode 30. If desired, the AFCS 8 may be configured to automatically engage the low noise descent mode 30 based on the altitude above the landing point 30c.

By way of example, the AFCS 8 may be configured to engage the low noise descent mode 30 automatically if predetermined engagement conditions are fulfilled. For instance, the predetermined engagement conditions are fulfilled if the helicopter 1 is landing in a noise-sensitive area. Furthermore, the predetermined engagement conditions may also be fulfilled if a predefined rotorcraft flight state, including at least one of flight attitude, flight altitude or flight speed, is prevailing.

Furthermore, after the low noise descent mode 30 is automatically engaged, the AFCS 8 may be configured to automatically fly the helicopter 1 along the noise-reduced descent trajectory 35 similar to flying after the low noise descent mode 30 is manually engaged as described above.

Illustratively, when the low noise descent mode 30 is manually or automatically engaged, appropriate feedback may be indicated to the pilot. For instance, the AFCS 8 may be configured to provide a noise-reduced flight indication on the MFD 10 if the low noise descent mode 30 is engaged.

If desired, the low noise descent mode 30 may be automatically disengageable. By way of example, the low noise descent mode 30 may be automatically disengaged when the helicopter 1 reaches the landing point 30c.

Finally, it should be noted that modifications to the above-described embodiments are within the common knowledge of the person skilled in the art and, thus, also considered as being part of the present invention. For instance, by applying the climbing side slip angle 25a on the noise-reduced climb trajectory 25 as shown in Figure 2, the reduced tail rotor thrust 25b and the airframe created anti-torque 25c may each contribute an approximated 50 % of the tail rotor thrust 21b. However, a different climbing side slip angle may also be determined by the AFCS 8 such that the reduced tail rotor thrust 25b contributes more than the airframe created anti-torque 25c in canceling the undesired torque produced by the main rotor 1a, and so on.

### Reference List

1 rotorcraft
1a multi-blade main rotor
1b, 1c rotor blades
1d rotor head
1e main rotor actuators
1f landing gear
1g engines
2 fuselage
2a cockpit
2b rear fuselage
3 tail boom
3a horizontal stabilizer
3b tail boom cone
4 counter-torque device
4a tail rotor
4b tail rotor actuators
4c tail rotor shrouding
5 fin
6 flight control system
7 flight controls
8 automatic flight control system
9 flight management system
10 multi-function display
20 low noise climb mode
20a climb trajectory starting point
20b forward flight direction
20c noise emission observation point
20d distance between climb trajectory starting point and noise emission observation point
21 climb trajectory
21b tail rotor thrust on climb trajectory
21d air speed on climb trajectory
22 climb angle on climb trajectory
23 climb trajectory height above noise emission observation point
25 noise-reduced climb trajectory
25a climbing side slip angle on noise-reduced climb trajectory
25b tail rotor thrust on noise-reduced climb trajectory
25c airframe created anti-torque on noise-reduced climb trajectory
25d air speed on noise-reduced climb trajectory
26 climb angle on noise-reduced climb trajectory
27 noise-reduced climb trajectory height above noise emission observation point
30 low noise descent mode
30a forward flight direction
30b noise emission observation point
30c landing point
30d distance between noise emission observation point and landing point
30e descent trajectory starting point
30f noise-reduced descent trajectory starting point
31 descent trajectory
31b tail rotor thrust on descent trajectory
31d air speed on descent trajectory
32 descent angle on descent trajectory
33 descent trajectory height above noise emission observation point
35 noise-reduced descent trajectory
35a descending side slip angle on noise-reduced descent trajectory
35b tail rotor thrust on noise-reduced descent trajectory
35c airframe created anti-torque on noise-reduced descent trajectory
35d air speed on noise-reduced descent trajectory
36 descent angle on noise-reduced descent trajectory
37 noise-reduced descent trajectory height above noise emission observation point

## Claims

1. A rotorcraft (1) comprising:
a flight management system (9) that is at least configured for determining a flight path for the rotorcraft (1) including a climb trajectory (21), a cruise trajectory, and a descent trajectory (31); and
an automatic flight control system (8) that is configured to execute at least one of:
a low noise climb mode (20) for determining at least one of a climb angle (22), a rate of climb, or a climbing side slip angle (25a) of the rotorcraft (1) associated with a noise-reduced climb trajectory (25) that is derived from the climb trajectory (21); or
a low noise descent mode (30) for determining at least one of a descent angle (32), a rate of descent, or a descending side slip angle (35a) of the rotorcraft (1) associated with a noise-reduced descent trajectory (35) that is derived from the descent trajectory (31).

2. The rotorcraft (1) of claim 1, wherein at least one of the noise-reduced climb trajectory (25) or the noise-reduced descent trajectory (35) is provided by the flight management system (9).

3. The rotorcraft (1) of claim 1, wherein at least one of the noise-reduced climb trajectory (25) or the noise-reduced descent trajectory (35) is provided by the automatic flight control system (8) and/or entered into the automatic flight control system (8) via pilot input devices.

4. The rotorcraft (1) of any one of the preceding claims, wherein the low noise climb mode (20) and the low noise descent mode (30) are manually or automatically engageable, and wherein the low noise climb mode (20) and the low noise descent mode (30) are manually or automatically disengageable.

5. The rotorcraft (1) of claim 4, wherein the automatic flight control system (8) is configured to enable manual engagement of the low noise climb mode (20) or the low noise descent mode (30) by a pilot of the rotorcraft (1) for initiating automatic rotorcraft control by the automatic flight control system (8) in the low noise climb mode (20) or the low noise descent mode (30).

6. The rotorcraft (1) of claim 4, wherein the automatic flight control system (8) is configured to engage the low noise climb mode (20) or the low noise descent mode (30) automatically if predetermined engagement conditions are fulfilled.

7. The rotorcraft (1) of claim 6, wherein the predetermined engagement conditions are fulfilled if the rotorcraft (1) is taking-off or landing in a noise-sensitive area.

8. The rotorcraft (1) of claim 6 or 7, wherein the predetermined engagement conditions are fulfilled if a predefined rotorcraft flight state, including at least one of flight attitude, flight altitude or flight speed, is prevailing.

9. The rotorcraft (1) of any one of claims 1 to 4, further comprising a multi-function display (10), wherein the automatic flight control system (8) is configured to provide a low noise indication on the multi-function display (10) for visualizing during climb or descent of the rotorcraft (1) that the noise-reduced climb trajectory (25) or the noise-reduced descent trajectory (35) is available.

10. The rotorcraft (1) of claim 9, wherein the automatic flight control system (8) is configured to provide flight director indications on the multi-function display (10) for enabling a pilot of the rotorcraft (1) to fly the rotorcraft (1) along at least one of the noise-reduced climb trajectory (25) or the noise-reduced descent trajectory (35).

11. The rotorcraft (1) of claim 9 or 10, wherein the automatic flight control system (8) is configured to provide a noise-reduced flight indication on the multi-function display (10) if the low noise climb mode (20) or the low noise descent mode (30) is engaged.

12. The rotorcraft (1) of any one of the preceding claims, comprising at least one main rotor (1a) with associated main rotor actuators (1e), at least one tail rotor (4a) with associated tail rotor actuators (4b), and at least one engine (1g) for powering the at least one main rotor (1a) and the at least one tail rotor (4a); wherein the automatic flight control system (8) is configured to determine trim states of the main rotor actuators (1e), the tail rotor actuators (4b) and the at least one engine (1g) which are required for flight of the rotorcraft (1) on the noise-reduced climb trajectory (25) or the noise-reduced descent trajectory (35).

13. The rotorcraft (1) of claim 12, wherein trim states of the tail rotor actuators (4b) associated with the climbing side slip angle (25a) of the noise-reduced climb trajectory (25) are determined to reduce noise emission of the at least one tail rotor (4a) on the noise-reduced climb trajectory (25).

14. The rotorcraft (1) of claim 12, wherein trim states of the tail rotor actuators (4b) associated with the descending side slip angle (35a) of the noise-reduced descent trajectory (35) are determined to reduce noise emission of the at least one tail rotor (4a) on the noise-reduced descent trajectory (35).

15. The rotorcraft (1) of any one of the preceding claims, wherein the automatic flight control system (8) is further configured to execute a low noise cruise mode for determining at least a cruising side slip angle of the rotorcraft (1), a roll angle of the rotorcraft (1), an adjusted rotational speed of a respective main and/or tail rotor of the rotorcraft (1), a respective airspeed and/or an associated ground speed of the rotorcraft (1) associated with a noise-reduced cruise trajectory that is derived from the cruise trajectory.

16. The rotorcraft (1) of claim 15, wherein the noise-reduced cruise trajectory is provided by the flight management system (9) or the automatic flight control system (8), and/or entered into the automatic flight control system (8) via pilot input devices.

17. The rotorcraft (1) of claim 15 or 16, wherein the low noise cruise mode is manually or automatically engageable, and wherein the low noise cruise mode is manually or automatically disengageable.

18. The rotorcraft (1) of claim 17, wherein the automatic flight control system (8) is configured to enable manual engagement of the low noise cruise mode by a pilot of the rotorcraft (1) for initiating automatic rotorcraft control by the automatic flight control system (8) in the low noise cruise mode.
